# EUROPEAN PATENT SPECIFICATION

(11) **EP 0 397 138 B1**
(45) Date of publication and mention of the grant of the patent: **16.08.1995**
(21) Application number: 90108726.2
(22) Date of filing: 09.05.1990
(51) Int. Cl.: H04L 29/06

(54) **Embedded control technique for distributed control systems**
Eingebettete Steuertechnik für verteilte Steuersysteme
Technique de commande intégrée pour systèmes à commande répartie

(30) Priority: 10.05.1989 US 349716
(43) Date of publication of application: 14.11.1990
(73) Proprietor: ALCATEL N.V., NL-1077 XX Amsterdam (NL)
(72) Inventor: Thorne, Hal Andrew, Wendell, North Carolina 27591 (US)
(74) Representative: Kugler, Hermann, Dipl.-Phys.

(56) References cited:
- EP-A- 0 228 629
- GB-A- 2 207 835
- IEEE: INTERNATIONAL CONFERENCE ON COMMUNICATIONS'86 vol. 2OF3, TORONTO, CANADApages 1105 - 1109; R.A. BILLHARDT: 'A SURVEY OF THE REMOTE SWITCHINGCAPABILITIES OF THE 5ESS SWITCH'
- PATENT ABSTRACTS OF JAPAN vol. 5, no. 7 (E-41)(679) 17January 1981 & JP-A-55 136 746

## Description

The present invention relates to electronic systems and more particularly to distributed control systems having a control technique wherein control information is embedded in the information that is communicated between elements of a system.

Such electronic systems are well known, e.g. from R.A. Billhardt et al, "A Survey of the Remote Switching Capabilities of the 5ESS Switch", IEEE International Conference on Communications ′86, Vol. 20F3, Toronto, Canada, pages 1105-1109.

There the remote switching capabilities of the 5ESS switch is described. Such a switch comprises a distributed network of loosely coupled modules. An administrative module provides technician interface and general switch administrative functions for all modules. A communication module is the center stage in the time-space-time division network used in the 5ESS switch and provides for intermodule control message communication. This switch is composed of a network of processors which provide independent operational and maintenance functions.

The trend in modern telephony equipment designs has been to incorporate microprocessors as system control elements. In most cases, such equipment must support numerous replicated elements which provide standard telephony services or interface standard telephony signals such as DS1. Such elements are often designed to minimize cost due to the impact of replication and system cost. As a result, these elements are often designed as non-intelligent elements having simple, register-oriented control (ROC) interfaces; and which must be controlled by a common control element whose cost can then be effectively distributed across the replicated elements.

A distributed control system architecture may use multiple, distributed microprocessors (control elements) which must communicate with one another and with ROC interfaces in order to co-ordinate system operations. These intelligent control elements often communicate with each other using higher-level, message-oriented control (MOC). A challenging aspect of such architectures is to provide a mechanism for controlling the numerous distributed elements, both intelligent and non-intelligent, in a flexible, but cost-effective, manner.

Non-intelligent elements which employ ROC must receive control information from an intelligent control element. The non-intelligent element normally responds to control information immediately upon reception thereof. Non-intelligent elements also produce information which must be read and acted upon by the control element. This information may fall into one of two categories: urgent information which must be acted upon quickly, and other information which may be referenced on an as-needed basis or periodically scanned at an appropriate rate.

Intelligent elements which communicate via MOC typically send messages in order to report significant system events. Since the information carried in messages may be urgent in nature, the receiving control element must be notified upon arrival of a message in order to promptly initiate message interpretation. Also, since the number and frequency of messages handled may be large, it is often important to minimize the burden of message transmission and reception on the control elements.

A common method of implementing MOC is by using commercially available Data Link Control devices. These devices are both costly and bulky, and separate devices, or a separate channel of a multi-channeled device, must be dedicated to each full duplex MOC channel. Each such device requires interface circuitry to synchronize its transmission and reception. Also, a Direct Memory Access (DMA) controller for each channel is usually needed to free the control element from handling each individual message character. While this technique may be acceptable for a small number of interconnected intelligent system elements, the cost and physical space required may become prohibitive in systems having a large number of elements.

For non-intelligent ROC elements, there are a myriad of techniques for implementing ROC, each one of which is typically customized and optimized to the type of element being controlled. In most cases where both ROC and MOC are present, the ROC technique is different and more primitive than the MOC technique. It is often required that the control element explicitly requests information from the controlled element when needed. If information is needed frequently in a system with many replicated elements, the repetitious request/response dialogue may represent a significant overhead to the control element.

The present invention will be described in the context of a telephone system. However, it should be noted that its application is general enough to be extended to any distributed control system architecture. In the following discussion, the term 'element' or 'system element' will be used as a generalized reference to a sub-unit of a complete system such as an individual printed circuit board assembly. The term 'control element' refers to a system element which contains a controlling entity such as a microprocessor.

In telephone systems, system elements are commonly interconnected by means of serial data links which carry multiplexed voice and/or data information. Since this network of data links must exist to transport voice/data information among the elements of the system, it is desirable to use the same physical link for control of the distributed elements in lieu of a separate overlaid control network. This can be done by allocating a small portion of the bandwidth, usually referred to as a 'time slot', for the control information. Since the control information is embedded in the same signal path with the voice/data information, it is referred to as an 'embedded' control channel.

The present invention contemplates an embedded control mechanism that can be used to transfer control information transparently between two entities, one of which is typically (but not necessarily) a control element. The simplicity and flexibility of the technique arises from the use of additional channel bandwidth to transmit control information. The technique allows the designer to greatly reduce the complexity of the receiving devices.

The format of control information communicated on such a channel and the techniques for transmitting and receiving such information are the subject of this invention. A unique aspect of this technique is that it may be used interchangeably for both ROC and MOC devices and is equally efficient in either mode. An additional advantage is that new elements may be added to the architecture or existing elements may be upgraded from ROC to MOC (or vice versa) without having to anticipate in advance the ratio of ROC and MOC elements that will be implemented.

Every unit of control information transferred by the mechanism of this invention is accompanied by control data which specifies how the information is to be handled by the receiving element. This control data may contain several fields which specify: 1) whether the channel is idle or carrying valid information; 2) the address or 'register number' into which the information will be deposited at the receiving element; 3) whether the information is urgent in nature; and 4) error detection information such as parity. Other fields could exist in the control data if needed for specific application; as, for example, if the urgency of the information is to be prioritized, additional bits could be provided in the field to establish a priority rating. The above four mentioned fields will be sufficient for a large class of applications and shall therefore be used for illustration purposes in the detailed description, which follows hereinafter.

It is not necessary that the control data and the information be carried in the same channel. They may be carried in separate channels, or even on separate physical media, as long as their association is preserved. For the sake of simplicity, it will be assumed that both are carried in the same channel in concatenated fashion. A channel may contain bits of control bats representing the following: a valid data indicator comprising a single bit indicating data valid or not valid; an interrupt indicator which may comprise a single bit alerting a microprocessor to interrupt and service the message contained in the channel; a parity bit for providing error detection; a field of bits representing an address designating a destination register or memory address in an intelligent device; and an information data field for transparently carrying the data between the system elements.

In ROC applications, the address field may be used by the transmitting element, to randomly direct information to control registers of a controlled element. Likewise, the controlled element may return information, upon request or autonomously, to the controlling element in randomly addressed fashion. Alternatively a controlled element could routinely transmit status information to its controller by continually, or periodically, transmitting the information in all of its registers sequentially. The information could then be received and deposited in 'shadow registers' in the memory of an intelligent controller where it could be referenced as needed by the controller. In the event of some unusual or otherwise significant event, the controlled element could activate an interrupt field when transmitting the register containing the pertinent information. When received by the controller, the interrupt field could be used to invoke the interrupt capability of the microprocessor or other intelligent device. If the event was particularly critical, the information could, in fact, suspend or supersede the normal sequential or periodic transmission of routine status information by the controlled element.

MOC applications are accommodated by virtue of the transparent delivery of up to 2ⁿ message characters, where n equals the number of address bits used. By implementing a message transfer protocol which segments and reassembles messages greater than m x 2ⁿ bits in length, where m equals the number of bits in the information data field, application software may transmit messages of any length transparently. Message segments could be brought to the attention of the receiving processor by activating the interrupt field of the last character transmitted in each segment. This allows the receiving processor to efficiently handle messages on a segment basis rather than a costly character-by-character basis.

A key aspect of this invention is that no sequence information need be retained by the receiving elements, since the information is always transmitted with explicit address tags. In an intelligent controller, a specific region of memory should be mapped to each channel carrying distributed control information. The receive logic of the controller, upon receiving the information, can easily derive the memory address into which the information should be deposited by concatenation of a base address, channel number (or time slot) on which the information was received, and the address tag received with the information. The received information can then be deposited in the memory by means of simplified direct memory access (DMA), transparent to the processor, unless an interrupt is indicated in the interrupt field. It is this simplifying feature that makes this technique particularly attractive as an alternative to conventional approaches involving replicated serial communication devices and DMA controllers in distributed systems with a centralized controller and a large number of replicated elements.

A primary objective of the present invention is to provide a distributed control communication system which does not need a separate overlay of control paths.
Another objective of the present invention is to provide a distributed control system that is compatible for use with both ROC and MOC devices.
Another objective of the present invention is to provide a distributed control system that is operative with any combination of ROC and MOC devices.
Another objective of the present invention is to provide a system which is transparent to the information transmitted between elements.
Another objective of the present invention is to provide duplex communication of control information between elements.

The above and other objectives and advantages of the invention will become more apparent upon reading the description of the invention in connection with the drawings described below.
- Figure 1: is a block diagram illustrating a distributed control system incorporating the embedded control technique of the present invention.
- Figure 2: illustrates the bit format used in the control system of the present invention.

In the following description and in the claims the term "message" will be used sometimes instead of the term "control information" and, if so used, it will refer to "control information" provided to both intelligent and non-intelligent elements.

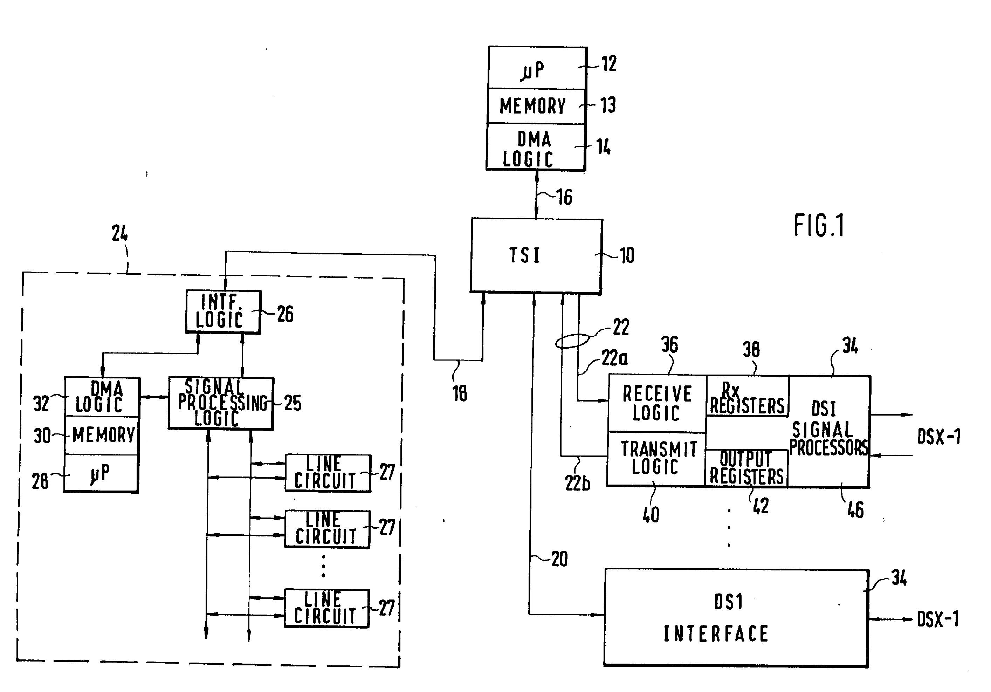

Figure 1 illustrates a distributed control system incorporating the embedded control technique of the present invention. The control system of Figure 1 diagrammatically illustrates a device that could be used in telecommunications. A time-slot interchanger (TSI) 10 is at the center of the system for distributing speech, data and control information. A microprocessor 12 is shown having a plurality of registers which are mapped into memory 13 by DMA logic 14. The microprocessor is used to control the system and to send control information to the various system elements. The registers which reside in memory 13 are, in effect, shadow registers to receive data from the system elements and temporarily hold such data until a time when the microprocessor can process the data.

A bidirectional serial data link 16 connects the microprocessor 12 to the time-slot interchanger 10. Link 16 comprises two unidirectional serial paths for transmitting and receiving information.

The time-slot interchanger 10 is connected to a number of system elements by serial data links 18, 20 and 22. Each of the serial data links comprises two paths for unidirectionally transmitting and receiving information. Link 22 is shown as two separate paths 22a and 22b for the purpose of simplifying the description of the invention. Serial data link 18 connects the time-slot interchanger 10 with an intelligent element 24, which may be a control element similar to microprocessor 12 used as shown in conjunction with a line shelf used in a telephone system. Intelligent element 24 may be connected to additional system elements, not shown. Intelligent element 24 is a terminal which interface logic 26 for separating control information from voice and data signals which are distributed to line circuits 27 via signal processing logic 25 and a microcomputer including a microprocessor 28, memory 30 and a direct memory access (logic) 32.

The time-slot interchanger 10 is further connected by serial data links 20 and 22 to non-intelligent elements 34 such as DS1 terminals of a telecommunications system. Link 22 is shown having path 22a connected to a receive logic circuit 36, which distributes control information based on an address, to receive registers 38, which may be embedded in various application specific integrated circuits (ASICs). In the present embodiment, the receive logic 36, receive register 38, transmit logic 40, output register 42, and most of the DS1 signal processing 46 are implemented in one such ASIC. It is to be understood that the number of receive registers 38 provided within each ASIC may vary, depending on the complexity of the ASIC and the control requirements. Each ASIC is provided with one or more output registers 42 for assembling information to be returned to microprocessor 12. The output registers 42 are connected to path 22b of link 22 via transmit logic 40 for connection to microprocessor 12 through TSI 10 and link 16.

The ASICs include an addressing and timing means which may be used to initiate reading of the output registers 42 during a particular period of time. The address means may comprise counters connected to receive a clock signal, said counters being adapted to provide an output for enabling the reading of the registers 42 at a particular address or time slot, on serial data link 22, associated with a particular ASIC or a register within the ASIC.

As previously mentioned, serial data links 16, 18, 20 and 22 include two paths for transmitting and receiving serial information. These serial data links normally carry time multiplexed voice and/or data information and are uniquely used in the present invention to convey control information between the elements of a system. The control information may include alarm, provisioning and control commands between a control element such as microprocessor 12 and the various system elements such as the intelligent terminal 24 or the DS1 terminals 34.

The serial data links are time-division multiplexed into a number of time slots as, for example, thirty-two sequential time slots representing a frame of information, with said frame being repeated. These individual time slots are commonly referred to as channels. The present invention relates to the use of one or more of these channels to convey alarm, provisioning or control commands for a distributed control system. Thus, the control mechanism of the present invention is embedded in the data paths used to transport the voice and data information of the telecommunications system.

The time slots, or channels, of the system in which the present invention may be used, include data or information in the form of words which may have any arbitrary length; however, a length of 16 bits is used in the described embodiment. The control mechanism of the present invention is implemented with a VI Channel, primarily because one bit of data conveyed in this channel is designated a V bit, or valid data indicator, while another bit is designated an I bit, or interrupt indicator.

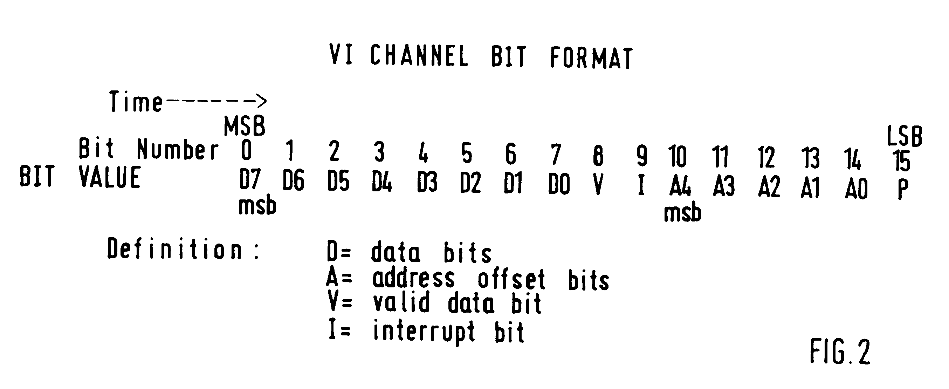

The VI Channel bit format is illustrated in Figure 2, where the 16 bits are shown as being numbered from 0 to 15, with 0 being the most significant bit and 15 the least significant bit. The word of data is divided into two fields, primarily an information field, including bits 0 through 7 which provide eight data bits and a control field comprising bits 8 through 15, which includes the valid data bit V, the interrupt bit I, a parity bit P and five address bits A0 to A4 found in bits 10 through 14, with bit A4 being in bit position 10 and being the most significant bit.

The valid data indicator, bit V, indicates whether the VI Channel is idle or is carrying valid data which must be acted upon. The interrupt indicator I indicates that the channel is signalling that the information field contains information of an urgent nature which should be acted upon immediately. The parity bit P is a one-bit error detection field which is established by the transmitting element and evaluated by the receiving element to verify the integrity of the entire word. The address field A0 to A4 contains a unique address of a register in an ROC device or of a location in a memory of a microcomputer, such as memory 30 in the intelligent terminal 24. For purposes of illustration, the address field is shown as being five bits in length; however, any length could be utilized as long as it is compatible with the total available word length and the bits of information needed in the information field. In a similar manner, the information field is shown as being eight bits long; however, any other convenient length could be used that is compatible with total word length.

The VI Channel is the alarm, provisioning and communications channel between the control element and the various other elements of the system. The VI Channel format is suitable for message communication between both types of elements: intelligent elements such as control elements, and non-intelligent elements having register-oriented control, such as the DS1 terminals. The format described uses half of the bandwidth for control purposes, while the remainder of the bandwidth is used for data or information transfer. The format of the VI Channel is completely transparent to the other channels of the serial data link and therefore does not interfere with the normal voice or data transmission.

The V bit indicates that the information being transmitted is valid, while the I bit is used as an interrupt for high-priority information. If the V bit is not set, the contents of the VI Channel are discarded and are not used by either the intelligent terminal 24 or the non-intelligent DS1 terminals 34. In like manner, if a parity error exists, the contents of the VI Channel will also be ignored.

The I bit in the VI Channel is used when messages are being sent to an intelligent terminal, so that the microprocessor may be interrupted to immediately act upon the message being sent.

A key feature of the VI Channel mechanism is that no sequence information need be retained by the receiving element, since the information is always transmitted with explicit address bits. In an intelligent control element, a specific region of the memory is mapped to each channel carrying distributed control information. The receiver logic of the control element, upon receiving the information, can easily derive the memory address into which the information should be deposited by concatenation of a base address, channel number on which the information was received, and the address bits received with the information. The received information is deposited in memory such as 13 or 30 by means of the direct memory access (DMA) 14 or 32 respectively in a manner that is entirely transparent to the processor, unless an interrupt (I bit) is set, in which case the processor will be interrupted at the first appropriate time to process the data being received on the VI Channel. Note that the DMA mechanism referred to here is not the conventional DMA controller which must be capable of sequencing memory operations by means of internal memory address counters. The DMA logic used with this invention is greatly simplified, requiring no internal address counters or state memory. It is therefore possible to implement DMA on a plurality of channels inexpensively and in much less physical space. Thus, the simplified mechanism of the present invention makes it particularly attractive as an alternative to conventional approaches, involving replicated serial communication devices and DMA controllers, in distributed control systems with a centralized controller and a large number of replicated elements.

For an understanding of the more detailed operation of the present invention, reference should be made to Figure 1. Microprocessor 12 generates a number of messages for various system elements. These messages are inserted in VI Channels in serial data link 16, with each channel containing a word as shown in Figure 2, namely the information field and a control field having an address and the V, I and P bits. It is contemplated that serial data link 16 will contain a plurality of VI Channels in each frame for conveying control information. The TSI 10 receives the VI Channels from link 16 and performs a grooming function on the VI Channels along with the other voice/data channels, distributing them to a plurality of serial data links, such as 18, 20 and 22, in accordance with its previously programmed channel connection map. In one or more VI Channels information may be serially transmitted on the transmission path 22a of serial data link 22, where the logic element 36 decodes the address and directs the byte to a register 38 in accordance with the address contained within the VI Channel word. If the VI Channel does not have the V bit set, logic element 36 will ignore the word and will not accept the VI Channel. In the transmit direction, the I bit is not necessary when dealing with non-intelligent system elements, since the VI Channel byte is immediately loaded into a register if valid information is indicated and the ASIC immediately responds to the command.

When a message is sent to intelligent terminal 24, the interface logic 26 will only accept the message when the V bit is set in the VI Channel word. A message may consist of a plurality of segments which are accumulated in memory 30 by microprocessor 28. Preferably the I bit will be set in the last character of each segment, so that the processor 28 will handle the message only after the complete segment is available, and not on a character-by-character basis.

Messages being returned to the microprocessor 12 require that the I bit be set if immediate action by the microprocessor is desired. Messages received on the VI Channels by the microprocessor 12 will be directed to shadow registers residing in memory 13, where the messages will be stored until the microprocessor polls the register at its convenience for receiving the stored messages. However, upon receipt of a message with the I bit set, the microprocessor will be interrupted at the appropriate time to act upon such message.

The various ASICs may have data to transmit back to the microprocessor 12, and this data is loaded in the output registers 42. The data could relate to various signal status conditions or could be merely a reflection of the received message so that the microprocessor can verify receipt of its last message Counters are provided with a clock signal, so that an address may be generated. The counter provides an enable signal during the appropriate time slot corresponding to the VI Channel, so that the output register 42 for the particular ASIC may be read to the serial data link 22 to transmit the return or reflected information in the appropriate channel and with an appropriate address.

Thus, it can be seen that all communications between system elements can be provided through the use of VI Channels. Such communications include alarm, provisioning and command functions. The VI Channel mechanism provides a means to communicate between system elements in a distributed control system, which means does not need a separate overlay of control paths. The VI Channel mechanism is uniquely compatible with both ROC and MOC devices, and more particularly, with any combination of such devices. The control information is distributed transparently between system elements and does not interfere with normal voice or data communication.

## Claims

1. An electronic system of the type having a plurality of functional elements comprising both intelligent elements (12, 13, 14; 24) and non-intelligent elements (34) interconnected by at least one time-division multiplexed data link (16, 18, 20, 22) for conveying information between the elements in time slots of said data link, **characterized in**
- that it comprises means for conveying messages between the elements in predetermined time slots of said data link (16, 18, 20, 22),
- that one (12, 13, 14) of the intelligent elements (12, 13, 14; 24) is adapted to generate a control message including command data and message control data, which includes an interrupt bit, a valid bit and a plurality of address bits,
- that each intelligent element (12, 13, 14, 24) has a microprocessor (12, 28) adapted to receive message oriented control,
- that each non-intelligent element (34) has a register (38) adapted to receive register-oriented control,
- that each addressed element (12, 13, 14; 24; 34) is adapted to read the message only if the valid bit is set, and
- that addressed intelligent elements (12, 13, 14; 24) are adapted to interrupt said microprocessor (12, 28) to service the message only if the interrupt bit is set.

2. A system as claimed in claim 1,
- wherein the element (12, 13, 14) generating the control message is adapted to insert the control message in a predetermined time slot of the data link (16, 18, 20, 22),
- wherein the non-intelligent element (34) is adapted to read the message from the data link (16, 18, 20, 22) during the time slot, the message control data including the address of the register (38) or a storage location in a memory designated to receive the message on the receiving element (34), and
- wherein the receiving register (38) is adapted to perform the reading.

3. A system as claimed in claim 2,
- wherein the data link is a duplex data link (16, 18, 20, 22) having two paths for conveying information in two directions,
- wherein the non-intelligent element (34) is adapted to generate a reply and to insert the reply in a predetermined time slot of the path of the data link (20, 22) that conveys information in a direction opposite from the path from which the message was read, and
- wherein the element (12, 13, 14) generating the control message is adapted to read the reply from the data link during the predetermined time slot in which the reply was inserted.

4. A system as claimed in claim 1,
wherein the microprocessor (12) is adapted to control the system and to generate a plurality of control messages addressed to other system elements (24, 34).

5. A system as claimed in claim 4,
- wherein the serial data link is a duplex serial data link (16, 18, 20, 22) having separate paths for conveying information in opposite directions between elements,
- wherein the elements (24, 34) other than the intelligent control element (12, 13, 14) are adapted to generate return messages and to insert the return messages in predetermined time slots of a data link path to convey information to the intelligent control element (12, 13, 14) and wherein the intelligent control element (12, 13, 14) is adapted to read the return messages and store the return messages in a number of shadow registers (13) which are included in the intelligent control element (12, 13, 14).

6. A system as claimed in claim 1,
wherein the message control data further includes a parity bit.

7. A system as claimed in claim 1,
wherein addressed non-intelligent register-oriented control elements (34) are adapted to execute a read message immediately.

8. A distributed control communication system,
- wherein a control element (12, 13, 14) includes a microprocessor (12) for generating system control messages, each including a plurality of address bits, a message valid bit and an interrupt bit;
- wherein at least one intelligent element (24) includes a microprocessor (28) and a memory (30), and has message-oriented control;
- wherein at least one non-intelligent element (34) includes a register (38) and has register-oriented control;
- wherein a plurality of time division multiplexed serial data links (16, 18, 20, 22) have first and second ends, each of the links is connected to one of the said system elements at a first end of the link;
- wherein switch means (10) are connected to the second ends of the links, the time-division multiplexed serial data links and the switch means (10) are operative to convey information between the system elements in time slots of the time-division multiplexed serial data links;
- wherein means are provided for conveying control messages from the control element (12, 13, 14) to designated ones of the elements and to convey return messages from the designated ones of the elements to the control element (12, 13, 14) in predetermined time slots of the data links;
- wherein a plurality of registers (13) included in the control element (12, 13, 14) are adapted to store the return messages and the microprocessor (12) is adapted to service the return messages in the register (13) in a routine manner;
- wherein a register (38) in a non-intelligent element (34) or a location in the memory (30) of an intelligent element (24) is addressed through the address bits, and
- wherein the microprocessor (28, 12) in an intelligent element (24) and in the control element (12, 13, 14) are adapted to interrupt to service a message received by the element if the message has the interrupt bit set.

9. A system as claimed in claim 8,
- wherein the serial links each comprise two separate paths for conveying information in opposite directions, and the means for conveying transmit messages from the control element on one path and transmit messages to the control element on the other path,
- wherein the elements other than the control element (24, 34) are adapted to generate return messages and to insert the return messages in predetermined time slots of a path to convey information to the control element (12, 13, 14), and
- wherein the control element (12, 13, 14) is adapted to read the return messages.

10. A system as claimed in claims 8 or 9,
- wherein each of the system control messages further includes a plurality of command data bits and a parity bit, and
- wherein the message valid bit, if set, indicates that a valid message is being transmitted and that the time slot is not idle, and the interrupt bit, if set, indicates that an urgent message is being transmitted and must be acted upon immediately.

## Patentansprüche

1. Elektronisches System des Typs, der mehrere funktionale Elemente aufweist und sowohl intelligente Elemente (12, 13, 14; 24) als auch unintelligente Elemente (34) umfaßt, die durch mindestens eine Zeitmultiplex-Datenverbindung (16, 18, 20, 22) zur Informationsübertragung zwischen den Elementen in Zeitkanälen der Datenverbindung verbunden sind, dadurch gekennzeichnet,
daß es Mittel zum Übertragen von Mitteilungen zwischen den Elementen in vorbestimmten Zeitkanälen der Datenverbindung (16, 18, 20, 22) umfaßt,
daß eines (12, 13, 14) der intelligenten Elemente (12, 13, 14; 24) geeignet ist, eine Steuermitteilung einschließlich Kommandodaten und Mitteilungsdaten zu erzeugen, die ein Unterbrechungs-Bit, ein Gültigkeits-Bit und eine Mehrzahl von Adressen-Bits einschließt,
daß jedes intelligente Element (12, 13, 14, 24) einen Mikroprozessor (12, 28) aufweist, der geeignet ist, mitteilungsorientierte Steuersignale zu empfangen,
daß jedes unintelligente Element (34) ein Register (38) aufweist, das geeignet ist, registerorientierte Steuersignale zu empfangen,
daß jedes adressierte Element (12, 13, 14; 24; 34) geeignet ist, die Mitteilung nur zu lesen, wenn ein Gültigkeits-Bit gesetzt ist und
daß adressierte intelligente Elemente (12, 13, 14; 24) geeignet sind, den Mikroprozessor (12, 28) zu unterbrechen, um die Mitteilung nur dann zu bearbeiten, wenn das Unterbrechungs-Bit gesetzt ist.

2. System, wie in Anspruch 1 beansprucht,
wobei das Element (12, 13, 14), das die Steuermitteilung erzeugt, geeignet ist, die Steuermitteilung in einen vorbestimmten Zeitkanal der Datenverbindung (16, 18, 20, 22) einzuführen,
wobei das unintelligente Element (34) geeignet ist, die Mitteilung von der Datenverbindung (16, 18, 20, 22) während des Zeitkanals und die Mitteilungssteuerdaten einschließlich der Adresse des Registers (38) oder eines Platzes in einem Speicher, der für das Empfangen der Mitteilung auf dem Empfangselement (34) bestimmt ist, zu lesen, und
wobei das empfangende Register (38) geeignet ist, das Lesen durchzuführen.

3. System, wie in Anspruch 2 beansprucht,
wobei die Datenverbindung eine Duplexdatenverbindung (16, 18, 20, 22) ist, die zwei Pfade zur Informationsübertragung in zwei Richtungen aufweist,
wobei das unintelligente Element (34) geeignet ist, eine Antwort zu erzeugen und die Antwort in einen vorbestimmten Zeitkanal des Pfades der Datenverbindung (20, 22) einzuführen, der die Information in eine entgegengesetzte Richtung gegenüber dem Pfad, von dem die Mitteilung gelesen wurde, überträgt, und
wobei das Element (12, 13, 14), das die Steuermitteilung erzeugt, geeignet ist, von der Datenverbindung während des vorbestimmten Zeitkanals, in den die Antwort eingeführt wurde, die Antwort zu lesen.

4. System, wie in Anspruch 1 beansprucht,
wobei der Mikroprozessor (12) geeignet ist, das System zu steuern und mehrere Steuermitteilungen, die an andere Systemelemente (24, 34) adressiert sind, zu erzeugen.

5. System, wie in Anspruch 4 beansprucht,
wobei die serielle Datenverbindung eine serielle Duplexdatenverbindung (16, 18, 20, 22) ist, die getrennte Pfade zur Informationsübertragung zwischen den Elementen in entgegengesetzten Richtungen aufweist,
wobei die Elemente (24, 34), anders als das intelligente Steuerelement (12, 13, 14), geeignet sind, Rückmeldungen zu erzeugen und die Rückmeldungen in vorbestimmte Zeitkanäle des Datenverbindungspfades einzuführen, um Informationen zu dem intelligenten Steuerelement (12, 13, 14) zu übertragen und wobei das intelligente Steuerelement (12, 13, 14) geeignet ist, die Rückmeldungen zu lesen und die Rückmeldungen in einer Anzahl von Schattenregistern (13) zu speichern, die in dem intelligenten Steuerelement (12, 13, 14) enthalten sind.

6. System, wie in Anspruch 1 beansprucht,
wobei die Steuerdaten der Mitteilung weiterhin ein Paritäts-Bit einschließen.

7. System, wie in Anspruch 1 beansprucht,
wobei adressierte, unintelligente, registerorientierte Steuerelemente (34) geeignet sind, eine gelesene Mitteilung unmittelbar auszuführen.

8. Verteiltes Steuerübertragungssystem,
wobei ein Steuerelement (12, 13, 14) einen Mikroprozessor (12) zum Erzeugen von Systemsteuermitteilungen einschließt, die jede eine Mehrzahl von Adressen-Bits, ein Gültigkeits-Bit für die Mitteilung und ein Unterbrechungs-Bit enthalten;
wobei mindestens ein intelligentes Element (24) einen Mikroprozessor (28) und einen Speicher (30) einschließt und eine mitteilungsorientierte Steuerung aufweist;
wobei mindestens ein unintelligentes Element (34) ein Register (38) einschließt und eine registerorientierte Steuerung aufweist;
wobei mehrere serielle Zeitmultiplex-Datenverbindungen (16, 18, 20, 22) erste und zweite Enden aufweisen und jede der Verbindungen mit einem der Systemelemente an einem ersten Ende der Verbindung verbunden ist;
wobei Schaltmittel (10) mit den zweiten Enden der Verbindungen verbunden sind und die seriellen Zeitmultiplex-Datenverbindungen und die Schaltungsmittel (10) in Betrieb sind, um Informationen zwischen den Systemelementen in Zeitkanälen der seriellen Zeitmultiplex-Datenverbindungen zu übertragen;
wobei Mittel zum Übertragen von Steuermitteilungen von dem Steuerelement (12, 13, 14) an bestimmte Elemente und zum Übertragen von Rückmeldungen von den bestimmten der Elemente zum Steuerelement (12, 13, 14) in vorbestimmten Zeitkanälen der Datenverbindung bereitgestellt werden;
wobei eine Mehrzahl von Registern (13), die in dem Steuerelement (12, 13, 14) enthalten sind, geeignet sind, die Rückmeldungen zu speichern und der Mikroprozessor (12) geeignet ist, die Rückmeldungen in dem Register (13) routinemäßig zu bearbeiten;
wobei ein Register (38) in einem unintelligenten Element (34) oder ein Platz in einem Speicher (30) eines intelligenten Elements (24) durch die Adressen-Bits adressiert wird, und
wobei der Mikroprozessor (28, 12) in einem intelligenten Element (24) und in einem Steuerelement (12, 13, 14) geeignet ist, die Bearbeitung einer Mitteilung, die durch das Element empfangen wurde, zu unterbrechen, wenn die Mitteilung ein gesetztes Unterbrechungs-Bit aufweist.

9. System, wie in Anspruch 8 beansprucht,
wobei jede der seriellen Verbindungen zwei getrennte Pfade zur Informationsübertragung in entgegengesetzten Richtungen umfaßt und Mittel zum Übertragen der von dem Steuerelement auf einem Pfad gesendeten Mitteilungen und der zu dem Steuerelement auf dem anderen Pfad gesendeten Mitteilungen aufweist,
wobei andere als die Steuerelemente (24, 34) hinzugefügt werden, um Rückmeldungen zu erzeugen und die Rückmeldungen in vorbestimmte Zeitkanäle eines Pfades einzuführen, um Informationen zu den Steuerelementen (12, 13, 14) zu übertragen und
wobei das Steuerelement (12, 13, 14) geeignet ist, die Rückmeldungen zu lesen.

10. System, wie in den Ansprüchen 8 und 9 beansprucht,
wobei jede der Systemsteuermitteilungen weiterhin mehrere Kommandodaten-Bits und ein Paritäts-Bit einschließt, und
wobei das Gültigkeits-Bit für die Mitteilung, wenn es gesetzt ist, anzeigt, daß eine gültige Mitteilung gesendet wurde und daß der Zeitkanal nicht leer ist, und wobei das Unterbrechungs-Bit, wenn es gesetzt ist, anzeigt, daß eine dringende Mitteilung gesendet wurde und unmittelbar danach reagiert werden muß.

## Revendications

1. Système électronique du type comportant une pluralité d'organes fonctionnels comprenant à la fois des organes intelligents (12, 13, 14; 24) et des organes non-intelligents (34) interconnectés par au moins une liaison de données (16, 18, 20, 22) à multiplexage par répartition dans le temps pour transporter une information entre les organes dans les tranches de temps de ladite liaison de données, caractérisé
- par le fait qu'il comporte des moyens pour transporter des messages entre les organes dans des tranches de temps prédéterminées de ladite liaison de données (16, 18, 20, 22),
- par le fait que l'un (12, 13, 14) des organes intelligents (12, 13, 14; 24) est conçu pour générer un message de commande incluant des données d'instruction et des données de commande de message qui contiennent un bit d'interruption, un bit de validité et une pluralité de bits d'adressage,
- par le fait que chaque organe intelligent (12, 13, 14, 24) comporte un microprocesseur (12, 28) conçu pour recevoir des données de commande à orientation message,
- par le fait que chaque organe non-intelligent (34) comporte un registre (38) conçu pour recevoir des données de commande à orientation registre,
- par le fait que chaque organe (12, 13, 14; 24; 34) identifié par une adresse est conçu pour ne lire le message que si le bit de validité est activé, et
- par le fait que des organes intelligents (12, 13, 14; 24) identifiés par une adresse sont conçus pour n'interrompre ledit microprocesseur (12, 28) pour traiter le message que si le bit d'interruption est activé.

2. Système selon la revendication 1,
- dans lequel l'organe (12, 13, 14) générant le message de commande est conçu pour insérer le message de commande dans une tranche de temps prédéterminée de la liaison de données (16, 18, 20, 22),
- dans lequel l'organe non-intelligent (34) est conçu pour lire le message dans la liaison de données (16, 18, 20, 22) au cours de la tranche de temps, les données de commande du message incluant l'adresse du registre (38) ou une position de mémoire dans une mémoire conçue pour recevoir le message sur l'organe récepteur (34), et
- dans lequel le registre récepteur (38) est conçu pour exécuter la lecture.

3. Système selon la revendication 2,
- dans lequel la liaison de données est une liaison de données duplex (16, 18, 20, 22) comportant deux voies pour transporter l'information dans les deux sens,
- dans lequel l'organe non-intelligent (34) est conçu pour générer un accusé de réception et pour insérer l'accusé de réception dans une tranche de temps prédéterminée de la voie de la liaison de données (20, 22) qui transporte l'information en sens opposé du voie en provenance de laquelle le message a été lu, et
- dans lequel l'organe (12, 13, 14) générant le message de commande est conçu pour lire l'accusé de réception en provenance de la liaison de données au cours de la tranche de temps prédéterminée dans laquelle l'accusé de réception a été inséré.

4. Système selon la revendication 1,
dans lequel le microprocesseur (12) est conçu pour commander le système et pour générer une pluralité de messages de commande adressés aux autres organes du système (24, 34).

5. Système selon la revendication 4,
- dans lequel la liaison de données série est une liaison de données série duplex (16, 18, 20, 22) comportant des voies distinctes pour transporter l'information dans des sens opposés entre les organes,
- dans lequel les organes 24, 34) autres que l'organe de commande intelligent (12, 13, 14) sont conçus pour générer des messages en retour et insérer des messages en retour dans des tranches de temps prédéterminées du voie de la liaison de données pour transporter l'information à l'organe de commande intelligent (12, 13, 14) et dans lequel l'organe de commande intelligent (12, 13, 14) est conçu pour lire les messages en retour et mémoriser les messages en retour dans un certain nombre de registres fantômes (13) qui sont inclus dans l'organe de commande intelligent (12, 13, 14).

6. Système selon la revendication 1,
dans lequel les données de commande de message comportent en outre un bit de parité.

7. Système selon la revendication 1,
dans lequel des organes de commande (34) non-intelligents, à orientation registre, identifiés par une adresse, sont conçus pour exécuter immédiatement un message de lecture.

8. Système de communication à commande répartie,
- dans lequel un organe de commande (12, 13, 14) comporte un microprocesseur (12) pour générer des messages de commande du système, chaque message comprenant une pluralité de bits d'adressage, un bit de validité de message et un bit d'interruption;
- dans lequel au moins un organe intelligent (24) comporte un microprocesseur (28) et une mémoire (30) et présente une commande à orientation message;
- dans lequel au moins un organe non-intelligent (34) comporte un registre (38) et présente une commande à orientation registre;
- dans lequel une pluralité de liaisons de données série (16, 18, 20, 22) multiplexées par répartition dans le temps ont une première et une seconde extrémités, chacune des liaisons étant reliée à l'un desdits organes du système à une première extrémité de la liaison;
- dans lequel des moyens de commutation (10) sont reliés aux secondes extrémités des liaisons, dans lequel les liaisons de données série multiplexées par répartition dans le temps et les moyens de commutation (10) sont aptes à transporter l'information entre les organes du système dans des tranches de temps des liaisons de données série multiplexées par répartition dans le temps;
- dans lequel des moyens sont prévus pour transporter des messages de commande, depuis l'organe de commande (12, 13, 14), à ceux des organes qui sont désignés et pour transporter des messages en retour, depuis ceux des organes qui sont désignés, à l'organe de commande (12, 13, 14) dans les tranches prédéterminées des liaisons de données;
- dans lequel une pluralité de registres (13) inclus dans dans l'organe de commande (12, 13, 14) sont conçus pour mémoriser les messages en retour et dans lequel le microprocesseur (12) est conçu pour traiter de façon routinière les messages en retour qui se trouvent dans le registre (13);
- dans lequel un registre (38) qui se trouve dans un organe non-intelligent (34) ou une position de mémoire (30) d'un organe intelligent (24) a son adresse identifiée par les bits d'adressage, et
- dans lequel le microprocesseur (28, 12) qui se trouve dans un organe intelligent (24) et dans l'organe de commande (12, 13, 14) sont conçus pour s'interrompre pour pouvoir traiter un message reçu par l'organe si le message a son bit d'interruption activé.

9. Système selon la revendication 8,
- dans lequel les liaisons série comportent chacune deux voies distinctes pour transporter l'information dans les sens opposés et dans lequel les moyens de transport transmettent sur l'une des voies les messages provenant de l'organe de commande et sur l'autre voie les messages envoyés à l'organe de commande,
- dans lequel les organes autres que l'organe de commande (24, 34) sont conçus pour générer des messages en retour et pour insérer des messages en retour dans les tranches de temps prédéterminées d'une voie pour envoyer l'information à l'organe de commande (12, 13, 14) et
- dans lequel l'organe de commande (12, 13, 14) est conçu pour lire les messages en retour.

10. Système selon les revendications 8 ou 9,
- dans lequel chacun des messages de commande du système comporte en outre une pluralité de bits de données de commande et un bit de parité,
- dans lequel le bit de validité du message, s'il est activé, indique qu'un message valide est en cours de transmission et que la tranche de temps n'est pas vide, et dans lequel le bit d'interruption, s'il est activé, indique qu'un message urgent est en cours de transmission et qu'il faut immédiatement réagir à ce message.
